**Europäisches Patentamt**

**European Patent Office**

**Office européen des brevets**

(11) Publication number : **0 546 558 A1**

(19)

## (12) EUROPEAN PATENT APPLICATION

(21) Application number : **92121100.9**

(22) Date of filing : **10.12.92**

(51) Int. Cl.⁵ : **H04N 7/00**

(30) Priority : **12.12.91 KR 2275591**

(43) Date of publication of application :
**16.06.93 Bulletin 93/24**

(84) Designated Contracting States :
**DE FR GB NL**

(71) Applicant : **GOLD STAR CO. LTD
20 Yoido-Dong, Yongdungpo-gu
Seoul (KR)**

(72) Inventor : **Sung Hoon Hong Gold Star Co., Ltd
20 Yoido-dong, Youngdungpo-gu
Seoul (KR)**

(74) Representative : **Masch, Karl Gerhard, Dr.
Dipl.-Phys. et al
Patentanwälte Andrejewski, Honke & Partner
Theaterplatz 3 Postfach 10 02 54
W-4300 Essen 1 (DE)**

(54) **Field rate converting method for highdefinition television and the apparatus thereof.**

(57) A field rate converting method and the apparatus thereof for being applied to a European HDTV (motion compensated 3-branch HD-MAC), which can solve the problem of deterioration in the resolution of a field rate increased image due to multiple images generated in a high-speed moving object, a block effect generated between pixel blocks corresponding to 20ms coding mode and 40ms coding mode, respectively, and is directly applicable when motion information is transmitted in a 20ms coding mode in the future. According to the present invention, when a 20ms coding mode block adjacent to a 40ms coding mode block is interpolated, the motion compensated interpolation is performed using a motion vector according to 40ms coding mode block, thereby removing a block effect between 20ms and 40ms coding mode blocks.

FIG. 1

The present invention relates to a field rate converting method and the apparatus thereof, being applied to European High-Definition Television(HDTV) (motion compensated 3-branch HD-Multiplexed Analog Component(HD-MAC), and more particularly to a field rate converting method and the apparatus thereof which can improve picture quality of an image having a field rate converted by performing motion compensated interpolation if a block corresponding to a 40ms coding mode exists in adjacent pixel blocks, particularly in a 20ms coding mode, and by performing linear interpolation if the block corresponding to 40ms coding mode does not exist in adjacent blocks, during increasing the field rate of motion compensated 3-branch HD-MAC signal from 50Hz to 60Hz or 50Hz to 100Hz.

As is generally known, when temporal information is insufficient in a TV image, i.e., when a field rate is low, image juddar or large area flicker occurs, thereby decreasing picture quality. Particularly, since such a picture deterioration phenomenon has been noticed in European TV type having a low field rate (50Hz), the field rate has been increased as preparation for this.

As conventional field rate increasing methods, linear interpolation, field (frame) repetition, and motion compensated interpolation are disclosed.

Linear interpolation linearly interpolates two fields to make a new field, but has the disadvantages of generating blurring or multiple images in the interpolated field image and decreasing resolution. Field (frame) repetition repeatedly displays the previously displayed field (frame), but has the disadvantage of generating motion juddar phenomenon when the motion of a moving object is very large.

Motion compensated interpolation estimates the motion direction (motion estimation) of a moving object existing in the image using two or more images and makes a new field (frame) using motion information (a motion vector) and position information of field (frame) to be interpolated, but has the disadvantage of additionally requiring a circuit for performing motion estimation.

Particularly, in the 3-branch HD-MAC performing motion compensation in 40ms coding mode among the conventional field rate converting methods, 80ms coding mode (still mode: speed of below 0.5 sample/40ms), 40ms coding mode (low speed mode: speed of 0.5 to 12 sample/40ms), and 20ms coding mode (high speed mode: speed of above 12 sample/40ms) are classified and processed. And, since motion information of 40ms coding mode and a mode determining signal are transmitted to a receiving terminal through Digital Assistant Television(DATV) channel, the field rate conversion is performed by frame repetition in 80ms coding mode, motion compensated interpolation in 40ms coding mode, and linear interpolation in 20ms coding mode.

However, since the above-mentioned field rate increasing method uses only linear interpolation to increase the field rate, particularly in 20ms coding mode where a moving object having high-speed motion exists in an image, blurring is generated in the contour of the moving object. Particularly, there are the disadvantages of generating decreased resolution of the field rate increased whole image due to multiple images generated in a high-speed moving object, generating a block effect between pixel blocks corresponding to 20ms and 40ms coding modes, and difficulty when a motion vector is transmitted in 20ms coding mode in the future.

It is an object of the present invention to provide an HDTV field rate converting method and the apparatus thereof which assigns a motion vector being suitable for each pixel using motion vectors assigned in adjacent blocks of each pixel within a field which will be motion-compensated interpolated, thereby solving picture quality deterioration phenomenon such as a block effect between blocks generated when motion compensation is simply performed using motion information whose motion is estimated for each block, and particularly, a block effect between pixel blocks corresponding to 20ms and 40ms coding modes.

It is another object of the present invention to provide an HDTV field rate converting method and the apparatus thereof which does not require an additional motion estimation during field rate conversion, so that the converter is simplified and the cost reduced.

It is still another object of the present invention to provide an HDTV field rate converting method and the apparatus thereof ; which is applicable when motion information is transmitted in a 20ms coding mode.

To achieve these objects, there is provided a field rate converting method for HDTV which comprises the steps of:

increasing the field rate by frame (field) repetition in a 80ms coding mode;

increasing the field rate by motion compensated interpolation using motion information transmitted through a DATV channel in a 40ms coding mode; and

increasing the field rate by linear interpolation in a 20ms coding mode if a pixel block corresponding to a 40ms coding mode does not exist in adjacent pixel blocks, and by motion compensated interpolation selecting a pixel vector within a field to be interpolated as a motion vector minimizing a cost function using motion information, if a pixel block corresponding to a 40ms coding mode exists in adjacent pixel blocks.

Also, there is provided a field rate converting apparatus for HDTV which comprises:

deshufflers and upsamplers for deshuffling and upsampling an inputted luminance signal according to 20ms, 40ms and 80ms coding modes;

low-pass filters having predetermined horizontal and vertical cut-off frequencies, for respectively filtering restored signals;

40ms and 80ms field rate converters for increasing a field rate according to the 40ms and 80ms coding modes, respectively; and

a 20ms field rate converter for basically performing linear interpolation for a filtered luminance signal in the 20ms coding mode, and performs motion compensated interpolation if there is a pixel block corresponding to a 40ms coding mode exists in adjacent pixel blocks.

The above objects and other advantages of the present invention will become more apparent by describing the preferred embodiment of the present invention with reference to the accompanying drawings, in which;

FIG.1 is a block diagram showing the constitution of a motion compensated 3-branch HD-MAC luminance signal encoder;

FIG.2 is a block diagram showing the constitution of a motion compensated 3-branch HD-MAC luminance signal decoder;

FIGs.3A to 3G are timing diagrams showing temporal processing steps in a 80ms coding mode;

FIGs.4A to 4G are timing diagrams showing temporal processing steps in a 40ms coding mode;

FIG.5 is a view for explaining motion estimation by block matching algorithm in a conventional HD-MAC encoder;

FIG.6 is a view for explaining motion compensated interpolation in a conventional HD-MAC decoder;

FIGs.7A to 7G are timing diagrams showing temporal processing steps in a 20ms coding mode;

FIG.8 is a block diagram showing an embodiment of a field rate converting apparatus according to the present invention;

FIGs.9A to 9E are timing diagrams showing temporal processing steps in an 80ms coding mode by the field rate converting method of the present invention;

FIGs.10A to 10D are timing diagrams showing temporal processing steps in a 40ms coding mode by the field rate converting method of the present invention;

FIG.11A to 11E are timing diagrams showing temporal processing steps in a 20ms coding mode by the field rate converting method of the present invention;

FIG.12 is a block diagram showing the constitution of a 80ms field rate converter according to the present invention;

FIG.13 is a block diagram showing the constitution of a 20ms field rate converter according to the present invention;

FIG.14 is a block diagram of a motion compensated interpolator in the present 20ms field rate converter shown in FIG.13;

FIGs.15A and 15B are constitution diagrams of a pixel field showing vector selecting methods performed in the present motion compensated interpolator;

FIG.16 is a block diagram of an output selector and a change detector in the present motion compensated interpolator shown in FIG.14; and

FIG.17 is a constitution diagram of a pixel field showing temporal and spatial interpolation by the motion compensated interpolator shown in FIG.14.

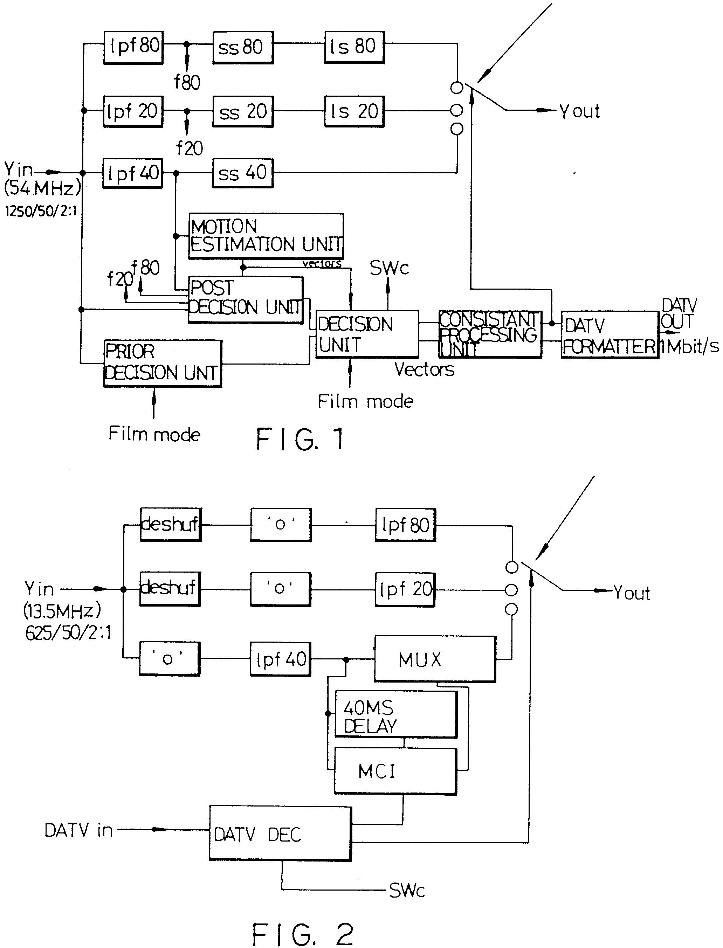

FIG.1 shows a motion compensated 3-branch HD-MAC luminance signal encoder, in which an input video signal Y is filtered by passing a diagonal 2D low-pass filter lpf80 having horizontal and vertical cut-off frequencies of fs/2 with respect to a sampling frequency fs, and the signal processing step of frame repetition corresponding to 80ms coding mode is performed through a subsampler SS80 and a line shuffler ls80, thereby carrying out field rate conversion. Also, the signal processing step of linear interpolation corresponding to 20ms coding mode is performed through a 2D low-pass filter lpf20 having a horizontal cut-off frequency of fs/2 and a vertical cut-off frequency of fs/4, a subsampler SS20, and a line shuffler ls20. The signal processing step of motion compensated interpolation corresponding to 40ms coding mode is performed through a 2D low-pass filter lps40 having horizontal and vertical cut-off frequencies of fs/4 and a subsampler SS40. That is, for a video signal received in the encoder, signal processing steps corresponding to 20ms, 40ms and 80ms coding mode, respectively are performed, in which final mode per pixel block(i.e., 16x16) is determined by adjusting the output results from a post-decision unit and a prior-decision unit, using a decision unit. The post-decision unit selects a mode having the smallest difference between the 2D low-pass filtered images corresponding to each coding mode, according to the amount of motion per pixel block of the input video signal estimated by a motion estimation unit, while the prior-decision unit selects a mode only for the input video signal.

The final mode determining signal is transmitted by a DATV formatter along with a motion vector value in the 40ms coding mode, and the DATV formatter has a transmission capacity of about 1.05Mbit/sec.

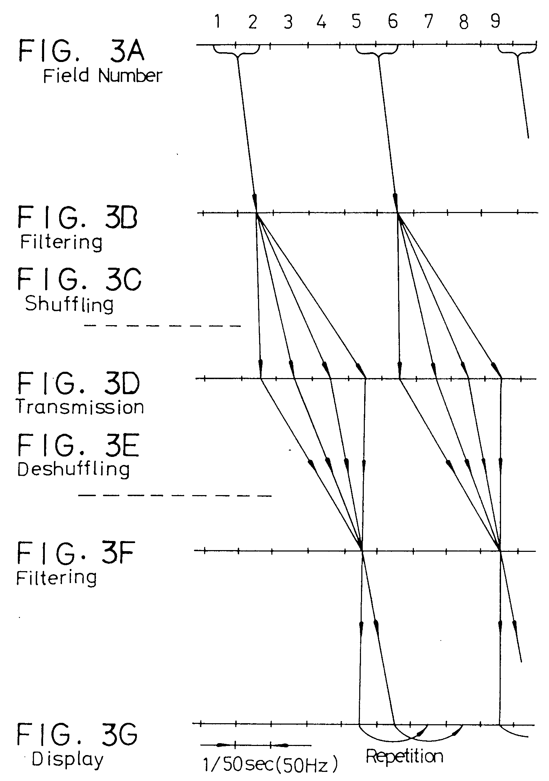

Meanwhile, in a film mode in which a film signal of 25Hz is transmitted, estimation of motion vector is impossible and the operation of the post-decision unit is stopped. In this mode, the 80ms coding mode is applied with respect to a still region of image and the 40ms coding mode is applied with respect to a motion region of image having a motion speed of 0.5 samples/40ms or more. FIG.2 shows a motion compensated 3-branch HD-MAC luminance signal decoder, which comprises deshufflers deshuf, upsamplers 'o', 2D low-pass filters lpf20, lpf40 and lpf80, a multiplexer MUX, a DATV decoder DATV DEC, a motion compensated interpolator MCI etc., so that the processing step in each coding mode corresponds to the reverse of the encoder function. In the 80ms coding mode, the conventional signal processing steps according to coding modes, performed by the encoder and decoder shown in FIGs.1 and 2 are constituted by the temporal processing steps as shown in FIGs.3A to 3G.

First of all, in the encoder, first two fields of four continuous fields of inputted video signal as shown in FIG.3A are filtered within frame by the 2D low-pass filter lpf80 as shown in FIG.3B, are subsampled by the subsampler SS80 to be separated into four fields, and then are transmitted to a receiving terminal as shown in FIG.D through line shuffling by the line shuffler SS80 as shown in FIG.3C.

In the decoder, the received four fields are deshuffled by the deshuffler deshuf as shown in FIG.3E to be combined into one frame, which is filtered within frame by the 2D low-pass filter lpf80 as shown in FIG.3F. Then, the filtered one is displayed for 40ms by a 2:1 interlace scanning method through spatial compensation as shown in FIR.3G.

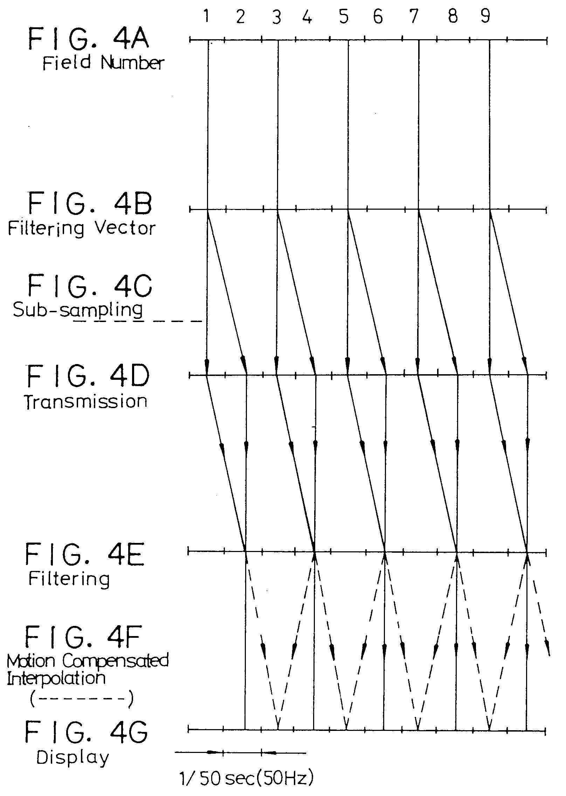

Then, the image displayed for the previous 40ms, is repeatedly displayed for the next 40ms. Meanwhile, the signal processing step of 40ms coding mode is constituted by the temporal processing steps as shown in FIGs.4A to 4G.

First of all, in the encoder, all of inputted fields as shown in FIG.4A are filtered within field by the 2D low-pass filter lpf40. Then, motion information (motion vector) to be used for restoring even field in the receiving terminal is estimated using two odd fields and one even field, and the filtered fields are subsampled by the subsampler SS40 as shown in FIG.4C. Then, the odd field is transmitted for 40ms as shown in FIG.4D.

In the decoder, the received odd field is filtered and spatially interpolated in FIGs.4E and 4F, and then is displayed by a 2:1 scanning method in FIG.4G. The even field is temporally interpolated using two odd fields and a motion vector transmitted through a DATV channel and then is displayed by a 2:1 interlaced scanning method shown in FIGs.4F and 4G.

In this case, the motion estimation in the encoder uses the symmetrical 3-step block matching algorithm.

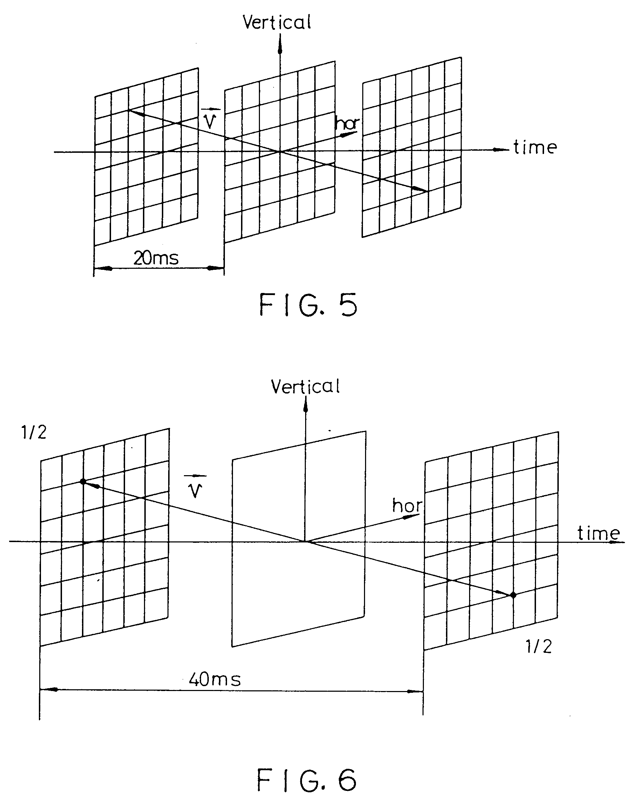

That is, as shown in FIG.5, in the motion estimation for odd field (frame), a motion vector V is estimated by symmetrical 3-step block matching algorithm and then a spatial propriety checking step is performed with adjacent eight vectors. At this time, a cost function for each motion vector is calculated in an actual pixel block (16 X 16), and a minimum cost function C(V) is calculated by the following equation:

$$C(V) = \sqrt{\sum_{j=1}^{N} [I(Pj, Fi) - \{I(Pj-V, Fi-1) + I(Pj+V, Fi+1)\}/2]^2}$$

(where, Pj is the position of the j'th pixel, N is the number of pixels within one block (i.e., 16 X 16), I(Pj, Fi) is brightness of pixel on a position Pj in a field Fi, and V is a motion vector V).

The vector having a minimum cost function as described above is regarded as a final vector for the corresponding pixel block.

Meanwhile, in the motion estimation in even field, a vector having a minimum approximate error is selected by a test step for adjacent nine vectors in the previous frame, as a motion vector for the current block of even field.

And, as shown in FIG.6 showing the motion compensated interpolation method in the decoder, in the 40ms coding mode, the even field is temporally interpolated using two spatially interpolated odd fields and the motion vector V transmitted through DATV channel.

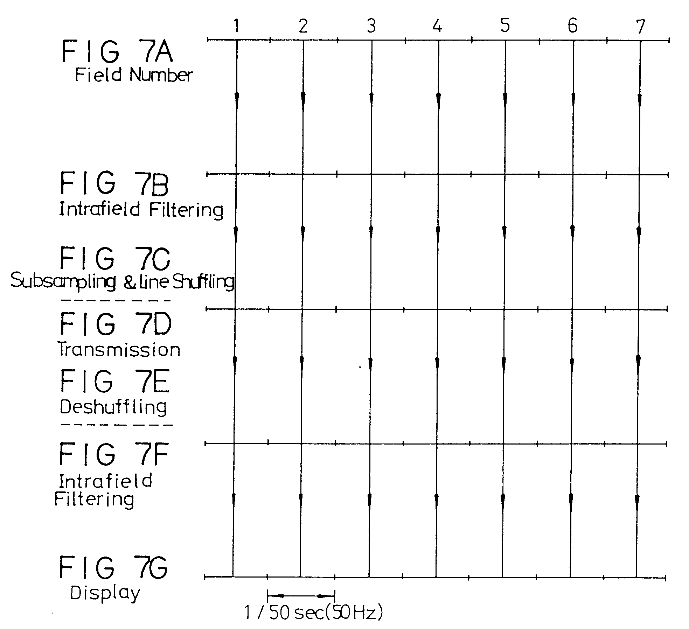

Meanwhile, the signal processing step in 20ms coding mode is performed by the temporal processing steps as shown in FIGs.7A to 7G.

That is, all of inputted fields shown in FIG.7A are filtered within field by the 2D low-pass filter lpf20 as shown in FIG.7B, are subsampled and line-shuffled by the subsampler SS20 and the line shuffler ls20 as shown in FIG.7C, and then are transmitted to the receiving terminal as shown in FIG.7D.

In the decoder, the received field is deshuffled by the deshuffler deshuf as shown in FIG.7E, is filtered by the 2D low-pass filter lpf20 and is spatially interpolated as shown in FIG.7F, and then is displayed by a 2:1 interlaced scanning method.

As described above, the conventional field rate converting method uses the frame repetition in the 80ms coding mode, the motion compensated interpolation in the 40ms coding mode, and the linear interpolation in the 20ms coding mode. Accordingly, since only the linear interpolation is used as a field rate increasing method for the 20ms coding mode where a moving object having high-speed motion exists within image, the blurring phenomenon is generated in the contour of moving object.

Particularly, in an object moving with a high speed, there are problems of decreased the whole resolution of the field rate increased image due to the generation of multiple images, generating a block effect between pixel blocks corresponding to 20ms and 40ms coding modes, and difficulty in being applied when motion information is transmitted in the 20ms coding mode.

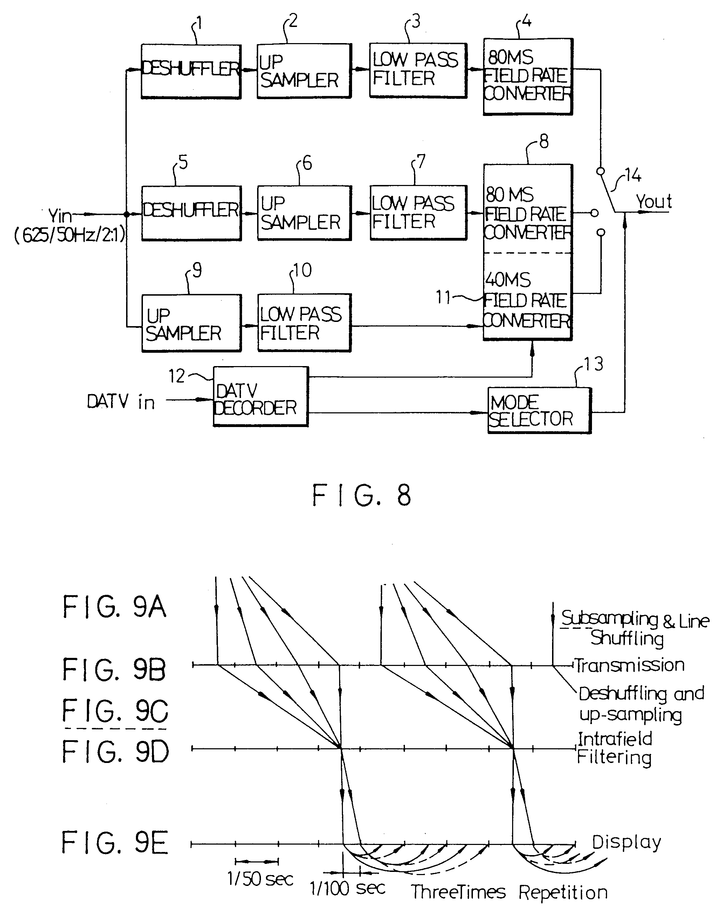

As shown in FIG.8, the field rate converting apparatus according to the present invention comprises a deshuffler 1 for restoring to an original signal, in the 80ms coding mode, the input luminance signal Yin of 625 line, 50Hz field rate, and 2:1 interlaced scanning type, being shuffled and transmitted from the encoder side, an upsampler 2 for performing upsampling to restore the output signal of the deshuffler 1, a low-pass filter 3 for filtering the output signal of the upsampler 2 by horizontal and vertical cut-off frequencies of fs/2, and a 80ms field rate converter 4 for increasing the field rate of filtered signal by frame (field) repetition in 80ms coding mode. Also, the field rate converting apparatus according to the present invention further comprises a deshuffler 5 for restoring an input luminance signal Yin to an original signal in 20ms coding mode, an upsampler 6 for performing upsampling to restore the output signal of the deshuffler 5, a low-pass filter 7 for filtering an output signal of the upsampler 6 by horizontal and vertical cut-off frequencies of fs/4, and a 20ms field rate converter 8 for basically performing linear interpolation for the filtered signal in 20ms coding mode and performing motion compensated interpolation if there exists an adjacent 40ms coding mode block. The field rate converting apparatus according to the present invention also comprises an upsampler 9 for restoring an input luminance signal Yin to an original signal in 40ms coding mode, a low-pass filter 10 for filtering an output signal of the upsampler 9 by a horizontal cut-off frequency of fs/2 and a vertical cut-off frequency of fs/4, and a 40ms field rate converter 11 for increasing the field rate of the filtered signal by motion compensated interpolation in 40ms coding mode. The field rate converting apparatus according to the present invention also comprises a DATV decoder 12 for decoding motion information (motion vector) and coding mode information from the input DATV signal and providing the motion information to the 20ms field rate converter 8 and the 40ms field rate converter 11 and the coding mode information to a mode selector 13, the mode selector 13 for controlling switching of output switching means 14 to be proper for the coding mode by an output of the decoder 12, and the output switching means 14 for selecting one of the outputs of the respective converters 4, 8 and 11 under the control of the mode selector 13 and outputting the selected output as a field rate increased final output luminance signal (Yout: 1250 line, 100Hz, and 2:1 interlaced scanning).

The operation and effect of the present apparatus constituted as described above will be described in detail.

The input luminance signal Yin of 625 line, 50Hz, and 2:1 interlaced scanning type transmitted from the transmitting terminal is made into one frame image according to the respective coding modes through the deshufflers 1 and 5, the upsamplers 2, 6 and 9, the low-pass filters 3, 7 and 10, and the video signal having an increased field rate 100Hz in each conversion mode by the 80ms field rate converter 4, the 20ms field rate converter 8 and the 40ms field rate converter 11 is outputted.

Meanwhile, motion information for 40ms coding mode is decoded by the DATV decoder 12 to be supplied to the 20ms field rate converter 8 and the 40ms field rate converter 11, and at the same time, information on 20ms, 40ms and 80ms coding modes is decoded to be supplied to the mode selector 13.

The mode selector 13 selects one of 20ms coding mode, 40ms coding mode and 80ms coding mode for each block and controls switching of the output switching means 14, thereby outputting a field rate increased output luminance signal Yout of 1250 line, 100Hz and 2:1 interlaced scanning type to constitute a picture.

In this case, the 80ms field rate converter 4 increases the field rate (from 50Hz to 100Hz) by the frame (field) repetition, and the 40ms field rate converter 11 increases the field rate by the motion compensated interpolation according to motion information transmitted only in the 40ms coding mode. Also, the 20ms field rate converter 8 increases the field rate by the motion compensated interpolation if a block corresponding to 40ms coding mode exists in adjacent pixel blocks, and by the linear interpolation if no block corresponding to 40ms coding mode exists in adjacent pixel blocks.

The 80ms field rate converting method for 80ms coding mode follows the temporal processing procedure of FIGs .9A to 9E.

That is, the input luminance signal Yin which has been subsampled and line-shuffled in the transmitting terminal (refer to the conventional one shown FIG.1) as shown in FIG.9A, and has been transmitted by four field images as shown in FIG.9B, is deshuffled and upsampled by the deshuffler 1 and the upsampler 2 to be combined into field image as shown in FIG.9C, and then is filtered by the diagonal 2D low-pass filter 3 having horizontal and vertical cut-off frequencies of fs/2 to constitute one frame image as shown in FIG.9D. The frame image is separated into even and odd fields and is displayed by a 100Hz and 2:1 interlaced scanning method and the displayed even and odd fields are repeatedly displayed three times (i.e. frame (field) repetition method) as shown in FIG.9E.

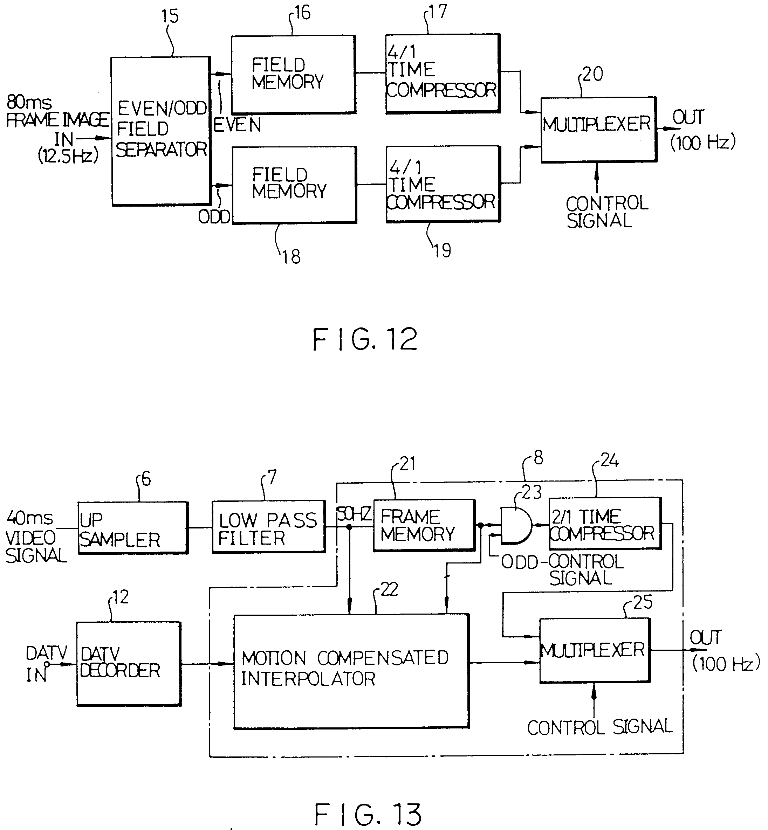

FIG.12 is a detailed circuit diagram of the above-mentioned 80ms field rate converter 4, which comprises a field separator 15 for separating the low-pass filtered frame image into even and odd fields in 80ms coding mode, an even-field memory 16 for storing the separated even-field image, an even-field time compressor 17 for time-compressing the stored even field image into 4/1, an odd-field memory 18 for storing the separated odd-field image, an odd-field time compressor 19 for time-compressing the stored odd-field image into 4/1, and a multiplexer 20 for outputting the time-compressed even and odd field image by 100Hz, 2:1 interlaced scanning type. The operation of 80ms field rate converter 4 follows the above-mentioned temporal processing step of FIG.9A to 9E.

That is, the frame image filtered by the low-pass filter 3 and constituted by every 80ms (12.5Hz) is separated into even and odd fields by the field separator 15, and is stored in the respective field memories 16 and 18, and then is time-compressed by the 4/1 time-compressors 17 and 19. And, then the even field and odd field are outputted repeatedly three times by the multiplexer 20.

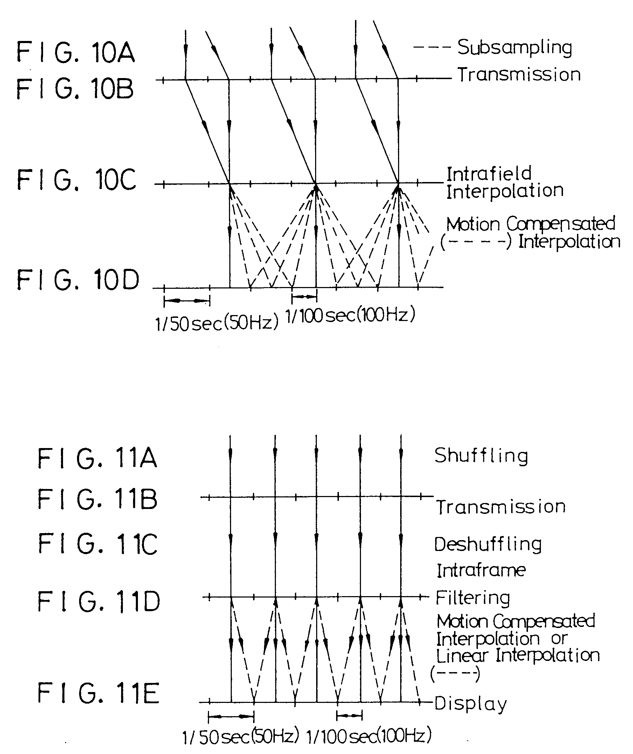

Meanwhile, the 40ms field rate converting method for the 40ms coding mode is performed by following the temporal processing procedure of FIGs.10A to 10D.

That is, the input luminance signal Yin which has been subsampled in the transmitting terminal as shown in FIG.10A and transmitted as two field images as shown in FIG.10B, is combined by the upsampler 9, and then frame image is made by the diagonal 2D low-pass filter 10 having vertical cut-off frequency of fs/4 and horizontal cut-off frequency of fs/2 as shown in FIG.10C. The image of three frames is motion-compensated interpolated into 1/4, 2/4 and 3/4 relative time positions, using the video signal and motion information transmitted with respect to 40ms coding mode, and then is displayed by 100Hz, 2:1 interlaced scanning method as shown in FIG.10D.

Meanwhile, the field rate conversion performed by the 20ms field rate converter 11 follows the temporal processing step as shown in FIGs.11A to 11E.

That is, all of fields which have been subsampled and line-shuffled as shown in FIG.11A and transmitted from the transmitting terminal as shown in FIG.11B, are deshuffled by the deshuffler 5 as shown in FIG.11C, and are filtered by the 2D low-pass filter 7 having horizontal and vertical cut-off frequencies of fs/2 as shown in FIG.11D.

Successively, to increase the field rate to 100Hz, if a block corresponding to 40ms coding mode exists in adjacent pixel blocks, the even field to be interpolated is motion-compensated interpolated according to motion information transmitted in 40ms coding mode and if not, it is linearly interpolated because of having no motion information and is displayed as shown in FIG.11E.

As described above, the field rate converting method for 20ms coding mode is performed by the 20ms field rate converter 8 according to the present invention. As shown in FIG.13, the 20ms field rate converter 8 comprises a frame memory 21 for storing low-pass filtered frame image with respect to the 20ms coding mode, a motion compensated interpolator 22 for selecting, correcting and assigning a motion vector to be interpolated for each pixel block using image stored in the frame memory 21 according to motion information and outputting motion-compensated interpolated image, a gate circuit 23 for outputting and controlling the image of frame memory 21 by an odd field control signal ODD-CTL, a time compressor 24 for time-compressing output image of the gate circuit 23 into 2/1, and a multiplexer 25 for displaying the output image of the time compressor 24 for odd field interval and the output image of the motion compensated interpolator 22 for even field interval. The operation of the 20ms field rate converter 8 follows the temporal processing step of FIGs.11A to 11E.

That is, the 20ms coding mode frame image filtered by the low-pass filter 7 is constituted by every 50Hz. The video signal is stored in the frame memory 21 and is received and time-compressed in the 2/1 time compressor 24 through the gate circuit 23 having an odd field control signal ODD-CTL as one input, and then is supplied to the multiplexer 25. Meanwhile, the motion compensated interpolator 22 supplies a motion compensated interpolated video signal to the multiplexer 25 if a 40ms coding mode block exists in adjacent pixel blocks, according to motion information received from the DATV decoder 12.

The multiplexer 25 selectively outputs the output image of time compressor 24 to be displayed for an odd field interval and the output image of motion compensated interpolator 22 to be displayed for even field interval, thereby increasing the field rate in the 20ms coding mode.

In the 20ms field rate converter 8 shown in FIG.13, the low-pass filter 7 and the 2/1 time compressor 24 among the constituent elements may be replaced by the low-pass filter 10 and the 4/1 time compressor respectively, so that the 20ms field rate converter can be used as a 40ms field rate converter 11 for 40ms coding mode. The operation of the 40ms field rate converter 11 is the same as in the above-mentioned processing procedure shown in FIGs.10A to 10D.

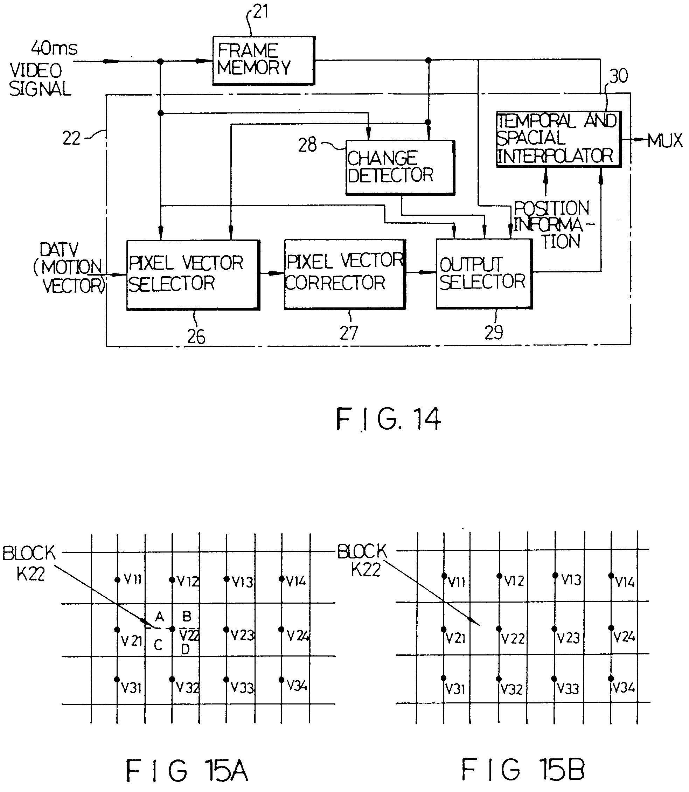

Accordingly, the motion compensated interpolator 22 shown in FIG.13 performs motion compensated interpolation being suitable for 20ms or 40ms coding modes using the motion information (motion vector) transmitted in 40ms coding mode. As shown in FIG.14, the motion compensated interpolator 22 comprises a pixel vector selector 26 for selecting and outputting a motion vector minimizing the cost function from motion vectors assigned in the pixel block, a pixel vector corrector 27 for correcting an error when an error is generated in the pixel vector selector 26, a change detector 28 for detecting a motion region and a still region in frame image, an output selector 29 for selectively outputting a zero valued pixel vector value or a corrected pixel vector according to the output of the change detector 28, to prevent error in the pixel vector assignment, and a temporal and spatial interpolator 30 for obtaining a pixel value to be used in interpolation and performing temporal and spatial interpolation according to position information using the given pixel value.

The operation of the motion compensated interpolator 22 is as follows.

The 20ms or 40ms low-pass filtered video signal is stored in the frame memory 21 and is used in motion compensated interpolation. Each motion vector (motion information) transmitted through the DATV channel is assigned for one pixel block of 40ms coding mode, where the proper motion vectors should be assigned in all pixels to perform the motion compensated interpolation which removes the block effect between blocks and is suitable for HDTV.

Also, according to the present invention, even when a 40ms pixel block is adjacent to a 20ms coding mode pixel block having no transmitted motion information, the pixel vector selection for motion compensated interpolation is properly performed.

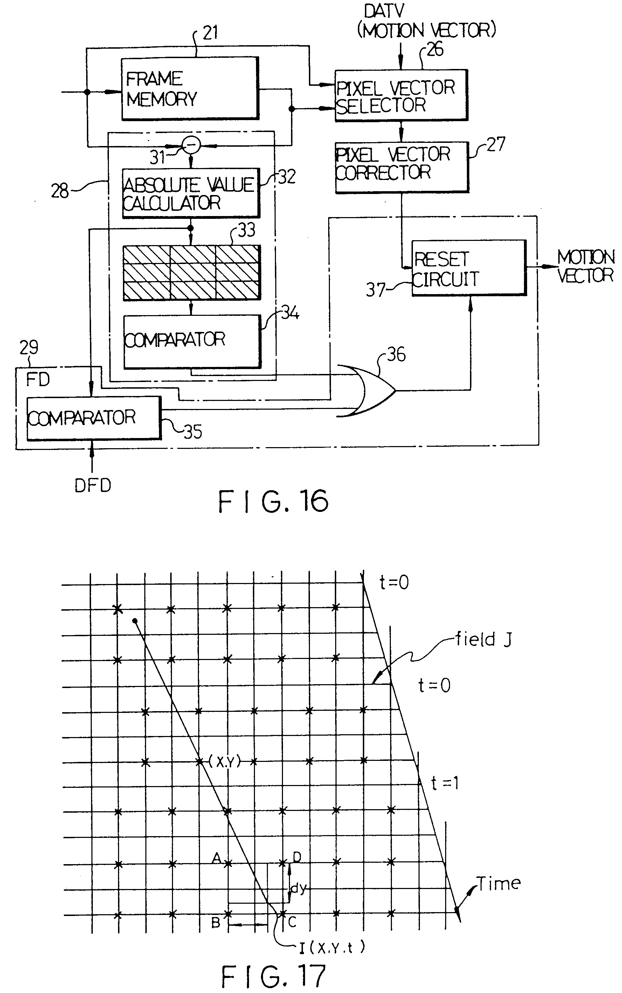

As describe above, the selection of pixel vector is performed by the pixel vector selector 26 by two methods as shown in FIGs.15A and 15B.

The pixel vector selecting method shown in FIG.15A divides the block K22 within the field to be motion-compensated interpolated by four and assigns a motion vector having the smallest cost function C(V) among vectors assigned in the adjacent four blocks of each sub-block, for instance, in case of A block, pixel vectors V11, V12, V21 and V22.

Here, when the field to be motion-compensated interpolated is the j'th field, the cost function C(V) is calculated by the following equation:

$$C(V) = \left| I_{j-1}(Pi - V) - I_{j+1}(Pi + V) \right|$$

(where, Pi is the position of the i'th pixel, Ij(Pi) is the luminance of a position Pi within the j'th field, and V is a motion vector assigned in a block).

For instance, the motion compensated 3-branch HD-MAC has 16X16 as the size of pixel block, thereby having 8X8 as the size of four divided blocks. Also, when the pixel block K22 is divided by four, as the motion vector assigned in the pixel within the block A, the motion vector for minimizing the cost function C(V) is selected from vectors $V_{11}$, $V_{12}$, $V_{21}$, and $V_{22}$ and as a motion vector assigned in the pixel within the block B, the motion vector for minimizing the cost function C(V) is selected from the vectors $V_{12}$, $V_{13}$, $V_{22}$, and $V_{23}$. Then, the selection for the motion vectors assigned in the pixels within the blocks C and D is performed in the same way.

Meanwhile, in another example of vector selection by the pixel vector selector 26, as shown in FIG.15B, to assign a motion vector to a pixel within the pixel block K22, a motion vector for minimizing the cost function C(V) is selected from motion vectors $V_{11}$, $V_{12}$, $V_{13}$, $V_{21}$, $V_{22}$, $V_{23}$, $V_{31}$, $V_{32}$ and $V_{33}$ assigned in neighbor blocks being adjacent to the pixel block K22, itself.

When a pixel vector has been selected by pixel vector selection as described above and the pixel block K22 to be interpolated corresponds to a 20ms coding mode, if a block corresponding to a 40ms coding mode exists in adjacent neighbor pixel blocks even if a motion vector does not exist, motion compensated interpolation is performed and if a pixel block of 40ms coding mode does not exist, the selected pixel vector value becomes "0", so that linear interpolation is performed.

Accordingly, resolution of image is increased and the block effect generated between 20ms and 40ms coding mode pixel blocks is inhibited.

As described in FIG.14, the pixel vector properly assigned and selected as described above is corrected for error in pixel vector selection through the pixel vector corrector (encoder) 27, and is supplied to the output selector 29.

The output selector 29 performs output selection according to the supplied information of the change detector 28 and the pixel vector corrector 27.

That is, the output selector 29 outputs as "0" the motion vector assigned in the pixel within the region to be determined as a still region in the change detector 28, and compares a frame difference signal (FD) and a displacement frame difference signal (DFD), where if DFD is greater than FD, the motion vector assigned in the corresponding pixel is outputted as "0", and otherwise, the inputted corrected pixel vector is outputted.

FIG.16 is a detailed circuit diagram of the output selector 29 and the change detector 28. The change detector 29 comprises a subtractor 31 for performing subtraction of frame video signal to output a frame difference signal (FD), an absolute value calculator 32 for calculating and outputting an absolute value of the subtracted frame difference signal (FD), a summer 33 for 3X3 summing the absolute value calculated frame difference signal to remove the noise influence, and a comparator 34 for comparing the summed signal level with a predetermined reference level TH to output the value determined as a motion region ("0") if it is greater than the reference level and as a still region ("1") if it is smaller than the reference level.

The output selector 29 comprises a comparator 35 for comparing a frame difference signal (FD) and a displacement frame difference signal (DFD), a gate circuit 36 for controlling outputting of a zero valued motion vector value and a corrected pixel vector according to the outputs of the respective comparators 34 and 35, and a reset circuit 37 for outputting the motion vector as "0" or a corrected pixel vector outputted from the pixel vector corrector 27, under the control of the gate circuit 36.

The frame video signal of input/ output terminal of the frame memory 21 is subtracted by the subtractor 31 and the result value of subtraction is outputted as a frame difference signal (FD), whose absolute value is calculated in the absolute value calculator 32 and is respectively supplied to the 3X3 summer 33 and the comparator 35 in the output selector 29.

The 3X3 summer 33 sums the inputted signals to remove the noise influence, and supplies the summed result to the comparator 34. The comparator 34 compares the summed signal level with a predetermined reference level TH, and outputs "0" value by determining the current pixel block as a motion region if the summed signal level is greater than a reference level TH from the compared result, and "1" by determining the current pixel block as a still region if the summed signal level is smaller than the reference level TH.

Here, the reference level TH is previously set to a proper level to determine motion and still of moving object within the image.

Meanwhile, the output selector 29 compares the frame difference signal (FD) and displacement frame difference signal (DFD) supplied from the absolute value calculator 32 and outputs "1" if DFD>FD and "0" if DFD<FD.

The outputs of comparators 34 and 35 are supplied to the gate circuit 36, and if the output of the gate circuit 36 is "1" according to the compared result of the comparators 34 and 35, the reset circuit 37 is reset to output the motion vector value as "0", and if the output of the gate circuit 36 is "0", the output of the reset circuit 37 becomes the pixel vector corrected in the pixel vector corrector 27.

The motion information selected by the output selector 29 as described above is supplied to the temporal and spatial interpolator 30 with position information as described in FIG.14.

The temporal and spatial interpolator 30 outputs a temporal and spatial interpolated video signal through the step shown in FIG.17.

That is, when a pixel in an arbitrary position (x,y) within a j'th field is restored, the pixel value to be used in temporal interpolation is spatially interpolated by an equation (an interpolation filter) given as $I(x,y,t) = (1-dx)(1-dy)A + (1-dx)dyB + dxdy\,C + dy(1-dy)D$ and is temporally interpolated by an equation (an interpolation filter) given as $I(x,y,z) = (1-a)I(x-adx, y-ady, 0) + aI(x+(1-a)dx, dy+y+(1-a)dy, 1)$.

Here, $I(x,y,\alpha)$ is the luminance of a pixel in a position (x,y) within a field of relative position $\alpha$ (t or a), dx and dy are increment of pixel vector assigned to the pixel to be interpolated, and A to D are the luminance of pixels in positions A to D.

That is, the temporal and spatial interpolation is processed by being divided into spatial interpolation and temporal interpolation. The spatial interpolation is a step $I(x,y,t)$ for calculating a pixel value needed for the temporal interpolation and the temporal interpolation is a step $I(x,y,a)$ for performing temporal interpolation using the pixel value obtained in the spatial interpolation and a pixel vector. At this time, as the position information provided in the temporal and spatial interpolator 30, 0, 1/4, 2/4 and 3/4 are supplied with a period of 25Hz when the field rate of 40ms coding mode is increased (from 50Hz to 100Hz), and 0 and 0.5 are supplied with a period of 50Hz when the field rate is increased using only the motion compensated interpolator 22, i.e., when the gate circuit 23, the 2/1 time compressor 24 and the multiplexer 25, shown in FIG.13 are removed. Meanwhile, the method and apparatus for converting the field rate according to the present invention is applicable by changing the position information of the temporal and spatial interpolator 30 to be suitable for a new TV type when the conversion is performed into a TV type having a field rate of 60Hz by TV standard conversion procedure (from HD-MAC to NTSC). And, if the interpolation step is processed by integer units to simplify the structure of the temporal and spatial interpolator 30, the spatial interpolation step $I(x,y,t)$ can be omitted. Meanwhile, the motion compensated interpolator 22 shown in FIG.14 performs the same field rate conversion, even if from the constituent elements, the pixel vector corrector 27, the change detector 28 and the output selector 29 are removed and the output of the pixel vector selector 26 is inputted to the temporal and spatial interpolator 30 at the same time, with the position information.

As described above, when the present invention is applied to 3-branch HD-MAC performing motion compensation in 40ms coding mode, the block effect between blocks, generated between 40ms and 20ms coding modes in the pixel vector selection is removed. And, since the 20ms coding mode block is mostly adjacent to 20ms or 40ms coding mode block, the blurring in contour of a moving object having high-speed motion is inhibited by the present field rate conversion according to the present invention to effect the resolution of image.

Also, when motion information in 20ms coding mode is transmitted to a receiving terminal in the future, the method and apparatus for converting a field rate according to the present invention can be directly applied. And, since the motion compensated interpolator has a simplified construction and has high efficiency, there is the advantage of its being capable of being applied to the conventional apparatus and method for increasing a field rate.

## Claims

1. A field rate converting method for high-definition television comprising the steps of;

    increasing the field rate by frame (field) repetition in an 80ms coding mode;

    increasing the field rate by motion compensated interpolation using motion information transmitted through a digital assistant television channel in a 40ms coding mode and;

    Increasing the field rate by linear interpolation in a 20ms coding mode if a pixel block corresponding to a 40ms coding mode does not exist in adjacent pixel blocks, and by motion compensated interpolation selecting a motion vector having a minimum cost function as a pixel vector within field to be interpolated, using motion information if a pixel block corresponding to a 40ms coding mode exists in adjacent pixel blocks.

2. A field rate converting method as claimed in claim 1, wherein in the step of increasing a field rate by motion compensated interpolation in a 20ms coding mode, selection of pixel vector is performed by quartering a pixel block within a field to be motion-compensated interpolated, and selecting a motion vector having a minimum cost function among vectors assigned to four blocks adjacent to each quartered sub-block.

3. A field rate converting method as claimed in claim 1, wherein in the step of increasing a field rate by motion compensated interpolation in a 20ms coding mode, selection of pixel vector using motion information is performed by selecting a motion vector having a minimum cost function among motion vectors assigned to a pixel block, itself, within a motion-compensated interpolated field and adjacent neighbor blocks.

4. A field rate converting apparatus for high-definition television, comprising;

    three deshufflers and three upsamplers for deshuffling and upsampling an inputted luminance signal transmitted from a transmitting terminal, according to 20ms, 40ms and 80ms coding modes;

    three low-pass filters having predetermined horizontal and vertical cut-off frequencies, for filtering restored signals, respectively;

    40ms and 80ms field rate converters for increasing a field rate according to the 40ms and 80ms coding modes, respectively; and

    A 20ms field rate converter for basically performing linear interpolation for a filtered luminance signal in the 20ms coding mode, and performing motion compensated interpolation when a pixel block corresponding to a 40ms coding mode exists in adjacent pixel blocks.

5. A field rate converting apparatus as claimed in claim 4, wherein said 20ms field rate converter comprises:

    a frame memory for storing low-pass filtered frame image in the 20ms coding mode;

    a motion compensated interpolator for selecting, correcting and assigning a motion vector to be interpolated per pixel block using image within said frame memory and outputting motion-compensated interpolated image;

    a gate circuit for outputting and controlling said frame memory image according to an odd field control signal inputted thereto;

    a time compressor for time-compressing output image of said gate circuit into 2/1; and

    a multiplexer for displaying output image of said time compressor for an odd field interval and output image of said motion compensated interpolator for an even field interval.

6. A field rate converting apparatus as claimed in claim 5, wherein said motion compensated interpolator comprises:

    a pixel vector selector for selecting and outputting a motion vector minimizing a cost function among motion vectors assigned to pixel blocks;

a pixel vector corrector for correcting an error when the error is generated in said pixel vector selector;

a change detector for detecting a motion region and a still region of frame image;

an output selector for selectively outputting a pixel vector value as "0" or a corrected pixel vector according to an output of said change detector, to prevent an error in pixel vector assignment; and

a temporal and spatial interpolator for obtaining a pixel value to be used in interpolation and performing temporal and spatial interpolation according to position information using the obtained pixel value and a pixel vector.

7. A field rate converting apparatus as claimed in claim 6, wherein said change detector comprises:

a subtractor for performing subtraction of frame image signal to output a frame difference signal;

an absolute value calculator for calculating and outputting an absolute value of the subtracted frame difference signal;

a summer for 3X3-summing the absolute value calculated frame difference signal to remove noise influence; and

a comparator for comparing the summed signal level with a predetermined reference level to output a value "0" determined as a motion region if the reference level is larger, and a value "1" determined as a still region if the reference level is smaller.

8. A field rate converting apparatus as claimed in claim 6, wherein said output selector comprises:

a comparator for comparing a frame difference signal and a displacement frame difference;

a gate circuit for receiving outputs of said comparator of said output selector and said comparator of said change detector; and

a reset circuit for selectively outputting a motion vector as "0" or a corrected pixel vector outputted from said pixel vector corrector, according to an output of said gate circuit.

F I G. 1

F I G. 2

1  2  3  4  5  6  7  8  9

FIG. 3A
Field Number

FIG. 3B
Filtering

FIG. 3C
Shuffling

FIG. 3D
Transmission

FIG. 3E
Deshuffling

FIG. 3F
Filtering

FIG. 3G
Display

1/50sec(50Hz)    Repetition

1 2 3 4 5 6 7 8 9

F I G. 4A
Field Number

F I G. 4B
Filtering Vector

F I G. 4C
Sub-sampling

F I G. 4D
Transmission

F I G. 4E
Filtering

F I G. 4F
Motion Compensated
Interpolation
( - - - - - - - - )

F I G. 4G
Display

1/ 50 sec(50Hz)

Vertical

$\overline{v}$

hor

time

20ms

FIG. 5

Vertical

1/2

$\overline{v}$

hor

time

1/2

40ms

FIG. 6

FIG 7A
Field Number

FIG 7B
Intrafield Filtering

FIG 7C
Subsampling & Line Shuffling

FIG 7D
Transmission

FIG 7E
Deshuffling

FIG 7F
Intrafield
Filtering

FIG 7G
Display

1 / 50 sec(50 Hz)

FIG. 8

FIG. 9A — Subsampling & Line Shuffling

FIG. 9B — Transmission

FIG. 9C — Deshuffling and up-sampling

FIG. 9D — Intrafield Filtering

FIG. 9E — Display

1/50 sec   1/100 sec   ThreeTimes Repetition

FIG. 10A

FIG. 10B --- Subsampling
--- Transmission

FIG. 10C
Intrafield
Interpolation

Motion Compensated
(– – – –) Interpolation

FIG. 10D

1/50 sec (50Hz) 1/100 sec (100Hz)

FIG. 11A
Shuffling

FIG. 11B
Transmission

FIG. 11C
Deshuffling

Intraframe

FIG. 11D
Filtering

Motion Compensated
Interpolation or
Linear Interpolation
(– – – –)

FIG. 11E
Display

1/50 sec (50Hz) 1/100 sec (100Hz)

FIG. 12

FIG. 13

FRAME MEMORY ~21

40ms VIDEO SIGNAL

22

28 CHANGE DETECTOR

TEMPORAL AND SPACIAL INTERPOLATOR 30

MUX

POSITION INFORMA- TION

DATV (MOTION VECTOR)

PIXEL VECTOR SELECTOR 26

PIXEL VECTOR CORRECTOR 27

OUTPUT SELECTOR 29

F I G. 14

BLOCK K22

V11  V12  V13  V14

A | B
V22
C | D

V21  V23  V24

V31  V32  V33  V34

F I G 15A

BLOCK K22

V11  V12  V13  V14

V21  V22  V23  V24

V31  V32  V33  V34

F I G 15B

FIG. 16

FIG. 17

**European Patent Office**

**EUROPEAN SEARCH REPORT**

Application Number

EP 92 12 1100

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | SIGNAL PROCESSING OF HDTV - PROCEEDINGS OF THE SECOND INTERNATIONAL WORKSHOP ON SIGNAL PROCESSING OF HDTV 29 February 1988, L'AQUILA, IT pages 137 - 143 F. W. P. VREESWIJK ET AL 'An HD-MAC Coding System' * page 138, line 19 - page 139, line 20; figures 1,2 * | 1-8 | H04N7/00 |
| A | SIGNAL PROCESSING OF HDTV, II - PROCEEDINGS OF THE THIRD INTERNATIONAL WORKSHOP ON HDTV 30 August 1989, TURIN, IT pages 187 - 194 F.W.P. VREESWIJK ET AL 'HDMAC Coding for MAC Compatible Broadcasting of HDTV Signals' * page 188, line 9 - page 189, line 36; figures 3,4 * | 1-8 | |

TECHNICAL FIELDS SEARCHED (Int. Cl.5)

H04N

The present search report has been drawn up for all claims

| Place of search | Date of completion of the search | Examiner |
|---|---|---|
| BERLIN | 18 MARCH 1993 | DUDLEY C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)